Europäisches Patentamt

**European Patent Office**

Office européen des brevets

(11) Publication number: **0 217 157**
A1

(12) **EUROPEAN PATENT APPLICATION**

(21) Application number: **86112142.4**

(22) Date of filing: **02.09.86**

(51) Int. Cl.⁴: **G 11 B 23/087**

(30) Priority: **02.09.85 JP 134699/85**

(43) Date of publication of application:
**08.04.87 Bulletin 87/15**

(84) Designated Contracting States:
**AT BE CH DE FR GB IT LI LU NL SE**

(71) Applicant: **Asahi Polyslider Co., Ltd.**
**4-3-4, Nishiawaji Higashi-Yodogawa-ku**
**Osaka-shi Osaka-fu(JP)**

(72) Inventor: **Morita, Susumu**
**1-27-B-404, Ichiban-cho Kurakuen**
**Nishinomiya-shi Hyogo-ken(JP)**

(74) Representative: **Hoffmann, Klaus, Dr. rer. nat. et al,**
**Hoffmann . Eitle & Partner Patentanwälte Arabellastrasse 4**
**D-8000 München 81(DE)**

(54) **Tape guide for VTR tape cassette.**

(57) A tape guide for a VTR tape cassette comprises a cylindrical substrate (1) and a leaf of a metal foil (2) wrapped around at least a part of a peripheral surface of the substrate (1) which is in contact with the VTR tape in use, which has a smooth surface and does not damage the running VTR tape.

Fig. 2

EP 0 217 157 A1

# TAPE GUIDE FOR VTR TAPE CASSETTE

## BACKGROUND OF THE INVENTION

### Field of the Invention

The present invention relates to a tape guide for VTR tape cassette. More particularly, it relates to a tape guide for a VTR tape cassette comprising a cylindrical substrate and a leaf of metal foil wrapped around the peripheral surface of the substrate.

### Description of the Prior Arts

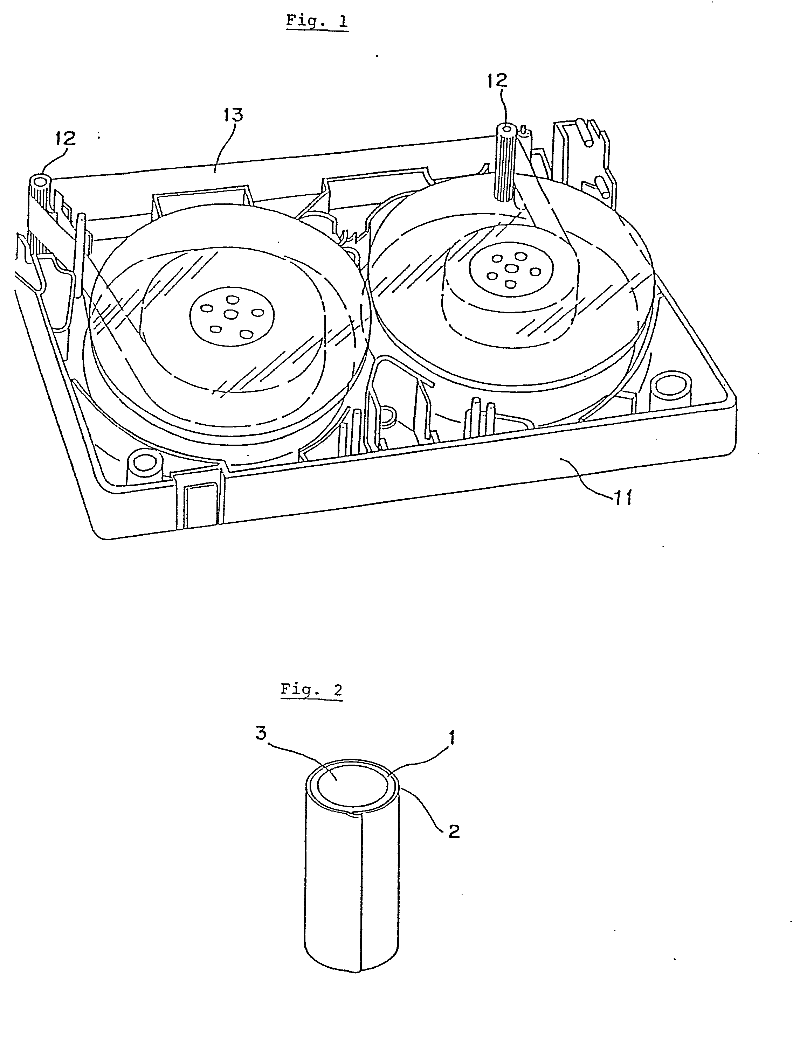

As shown in Fig. 1, a VTR tape cassette 11 is provided with tape guides 12 to make a VTR tape 13 smoothly run in the cassette. To this end, the tape guide should have an adequate coefficient of friction, for example, of 0.1 to 0.2 and not be abrased after many time fast forwarding and/or rewinding. In addition, the tape guide is required not to damage the VTR tape. As a tape guide which satisfies such severe requirements, used is a stainless steel guide which is precisely abrasion finished along a running direction of the tape. However, the production of such stainless steel tape guide is very complicate since it is produced by grinding and abrasing an ingot of stainless steel and cutting and tempering it.

## SUMMARY OF THE INVENTION

One object of the present invention is to provide a tape guide for a VTR tape cassette having a small coefficient of friction.

Another object of the present invention is to provide a tape guide for a VTR tape cassette which does not substantially damage or abrase the VTR tape.

Further object of the present invention is to provide a tape guide for a VTR tape cassette which makes the VTR tape smoothly run in a wide temperature range.

Yet another object of the present invention it to provide a tape guide for a VTR tape cassette which can be easily and economically produced.

These and other objects are accomplished by a tape guide for a VTR tape cassette of the present invention comprising a cylindrical substrate and a leaf of a metal foil wrapped around at least a part of a peripheral surface of the substrate which is in contact with the VTR tape in use.

BRIEF DESCRIPTION OF THE DRAWINGS

Fig. 1 is a perspective view of a typical VTR tape cassette without an upper half of the case, and

Fig. 2 is a perspective view of one preferred embodiment of a tape guide of the present invention.

DETAILED DESCRIPTION OF THE DRAWINGS

A tape guide of the present invention comprises a cylindrical substrate 1 and a leaf of a metal foil 2 wrapped around a peripheral surface of the substrate. The leaf of the metal foil is wrapped around the substrate so that, in use, a main part of the outer surface of the wrapped metal foil is in contact with the running VTR tape but the edges of the metal foil and the substrate does not contact the tape.

Usually, a turn of the leaf of the metal foil is wrapped around the substrate although it is possible to wrap two or more turns of the leaf of the metal foil. In so far as the tape does not contact the edges of the metal foil and the surface of the substrate, less than one turn of the leaf of the metal foil can be wrapped around the substrate.

Although the metal foil may be attached to the substrate with an adhesive, it is mechanically set on the substrate.

Since it is difficult to finish the edges of the metal foil so that they do not damage the VTR tape, it is preferred to fix the tape guide to a cassette case so that the tape guide does not move or rotate and the edges of the metal foil do not contact the running tape. The tape guide has a bore 3 in which an axis (not shown) provided in the cassette case is inserted.

Generally, the tape guide has a round cross section, although it may have other cross section, for example, an ellipsoidal cross section.

The substrate can be made of any material. In view of processability and cost, a resin is preferred. Examples of the resin are thermoplastic resins (e.g., polyethylene, polyamide, polyacetal, polybutylene terephthalate and polycarbonate) and thermosetting resins. The resin is used as a composition containing conventionally used additives.

The metal foil is preferably nonmagnetic. Preferred example of the metal foil is a stainless steel foil. Preferably, the surface of the metal foil is completely smooth, although it may have some unevenness so far as the smooth tape running is not deteriorated. The thickness of the metal foil is usually 50 to 80 microns in view of handling properties.

The tape guide may be produced by any method. For example, the substrate is molded by injection molding or extrusion using a profile die and cutting it in a suitable length. The metal foil is rolled to a suitable thickness and abrased to surface roughness of about 0.5 micron. Then, the foil is wrapped around and adhered to the substrate. Alternatively, the metal foil can be fixed around the substrate by using resiliency of the metal foil.

0217157

CLAIMS:

1. A tapge guide for a VTR tape cassette comprising a cylindrical substrate (1) and a leaf of a metal foil (2) wrapped around at least a part of a peripheral surface of the substrate (1) which is in contact with the VTR tape in use.

2. The tape guide according to claim 1, wherein the metal foil (2) is nonmagnetic.

3. The tape guide according to claim 2, wherein the metal foil (2) is a stainless steel foil.

4. The tape guide according to claim 1, wherein the substrate (1) is made of a resin.

5. The tape guide according to claim 4, wherein the resin is a thermplastic resin.

6. The tape guide according to claim 1, wherein one turn of the leaf of the metal foil (2) is wrapped around the substrate (1).

7. The tape guide according to claim 1, wherein the substrate (1) has a round cross section.

8. The tape guide according to claim 1, wherein the substrate (1) has a bore (3) for receiving an axis provided in the cassette.

9. The tape guide according to claim 1, wherein the substrate (1) has an ellipsoidal cross section.

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-4 191 345 (T. SATO et al.) <br><br> * column 2, line 32 - column 3, line 19; figures 1-5 * | 1-3,6, 7 | G 11 B 23/087 |
| X | DE-U-8 438 028 (BASF) <br><br> * page 6, line 36 - page 10, line 13; figures 4-8 * | 1-3,6, 7 | |
| X | GB-A-2 143 208 (TDK) <br><br> * page 2, lines 1-15; figures 1-3 * | 1-3,6, 7 | |
| A | FR-A-2 386 100 (START S.R.L.) <br> * figures 2, 3 * | 9 | |
| A | GB-A-2 108 081 (TDK) <br> * page 3, lines 32-45 * | 4,5 | TECHNICAL FIELDS SEARCHED (Int Cl 4) <br><br> G 11 B 15/00 <br> G 11 B 23/00 |
| P,X | EP-A-0 187 319 (BASF) <br> * page 8, line 32 - page 9, line 40; figures 9-12 * | 1-7 | |
| P,A | EP-A-0 170 772 (TANDY CORP.) <br><br> * figure 2 * | 1-3,6, 7 | |
| | --- -/- | | |

The present search report has been drawn up for all claims

| Place of search | Date of completion of the search | Examiner |
|---|---|---|
| BERLIN | 27-11-1986 | ROGNONI M.G.L. |

**0217157**

| DOCUMENTS CONSIDERED TO BE RELEVANT | | | Page 2 | |
|---|---|---|---|---|
| Category | Citation of document with indication, where appropriate, of relevant passages | Relevant to claim | CLASSIFICATION OF THE APPLICATION (Int. Cl.4) | |
| A | DE-A-2 808 998 (BOSCH) <br><br> * page 3, line 11 - page 4, line 9; figure 3 * <br><br> ----- | | | |

TECHNICAL FIELDS
SEARCHED (Int. Cl 4)

The present search report has been drawn up for all claims

| Place of search | Date of completion of the search | Examiner |
|---|---|---|
| BERLIN | 27-11-1986 | ROGNONI M.G.L. |